Europäisches Patentamt

European Patent Office

Office européen des brevets

(11) Publication number: **0 469 819 B1**

## EUROPEAN PATENT SPECIFICATION

(45) Date of publication of patent specification: **23.11.94**   (51) Int. Cl.⁵: **B65B 51/30**, B65B 9/10

(21) Application number: **91306910.0**

(22) Date of filing: **29.07.91**

(54) Sealing apparatus for a form-fill-seal packaging machine.

(30) Priority: **31.07.90 JP 204615/90**

(43) Date of publication of application:
**05.02.92 Bulletin 92/06**

(45) Publication of the grant of the patent:
**23.11.94 Bulletin 94/47**

(84) Designated Contracting States:
**DE FR GB IT**

(56) References cited:
**EP-A- 0 226 693**
**FR-A- 2 372 728**

(73) Proprietor: **ISHIDA CO., Ltd.**
**44 Shogoin-Sannocho**
**Sakyo-ku**
**Kyoto-shi (JP)**

(72) Inventor: **Fukuda, Masao**
**326-144 Ooaza-Bodaiji,**
**Kosei-cho**
**Koga-gun, Shiga (JP)**

(74) Representative: **Skone James, Robert Edmund et al**
**GILL JENNINGS & EVERY**
**Broadgate House**
**7 Eldon Street**
**London EC2M 7LH (GB)**

## Description

This invention relates to an apparatus for sealing for a form-fill-seal packaging machine of, for example, the vertical pillow type for sealing a thermoplastic flexible film material to form a bag.

Packaging machines of the form-fill-seal type and, in particular, of the so-called vertical pillow type are usually comprised of a shoulder-shaped member disposed above a vertical cylinder which is sometimes referred to as a loading cylinder. A web of belt-like elongated thermoplastic flexible film material, from which bags are to be made, is pulled out from a film supply roll and is wrapped around the loading cylinder by means of the shoulder-shaped member. For this reason, this shoulder-shaped member is sometimes referred to as a former. The side edges of the elongated film material are overlapped and these overlapped parts are thermally sealed as the film material is pulled down along the outer surface of the cylinder such that the film material is made into a tubular form. This sealing process is hereinafter referred to as the vertical sealing. A horizontally elongated heater is provided below the cylinder for a horizontal sealing process whereby the film material now in a tubular form is sealed horizontally into a bag-like form. In the meantime, articles to be packaged are dropped into this newly formed bag through the loading cylinder. Thus structured, packaging machines of the vertical pillow type are considered efficient because the production and filling of the bags can be carried out continuously and concurrently.

The aforementioned horizontal heater for horizontal sealing will be hereinafter referred to as a horizontal sealer and is generally comprised of a pair of horizontally elongated heating means, hereinafter referred to as seal jaws, which are pressed against each other from opposite sides of the tubular thermoplastic material to thereby make a horizontal seal. The methods of horizontal sealing may be broadly divided into the following two categories, the intermittent motion type and the continuous motion type. By a method of the intermittent motion type, the tubular film material to be horizontally sealed is pulled down in an intermittent stop-and-go manner and the seal jaws are moved towards each other and compress the film material therebetween from both sides while the downward motion of the film material is temporarily stopped. By a method of the continuous motion type, by contrast, the film material now in a tubular form is pulled down in a uniformly continuous motion and, in order to secure a finite sealing time, the sealing jaws are caused to also move in a downward direction together with the downward-moving film material. The present invention relates to a driving apparatus of the continuous motion type.

Many driving apparatus for a horizontal sealer have been considered. If the seal jaws are made to undergo circular motions in a vertical plane, they can make only a point contact with each other at the point where the two circular orbits are tangent to each other. In addition, the sealed surface becomes curved, rather than flat. Japanese Patent Publication Tokkai 62-235006 disclosed a driving apparatus for causing seal jaws to move linearly along the downward path of the film material such that the entire heating surfaces of the seal jaws can remain in contact with the film material for a finite duration of time. As means for providing such a linear motion to the seal jaws, however, generally D-shaped grooves were used to guide the seal jaws supported at end sections of rotary members. If the rotational motion of these rotary members is increased, to reduce the time required for sealing, for example, the force of inertia by the rotary members increases accordingly and an abnormal force tends to develop on the seal jaws where the grooves change their directions. Another disadvantage of this apparatus is that the trajectory of the seal jaws is invariably determined by the guiding grooves.

EP-A-0226693 discloses apparatus for sealing for a form-fill-seal packaging machine comprising a pair of elongated heater assemblies on opposite sides of a film path along which a bag-forming film material is transported; and

rotating means for causing said pair of heater assemblies to rotate in mutually opposite directions and each around one of a pair of mutually parallel horizontal axes while keeping both of said heater assemblies extended parallel to said axes such that said heater assemblies press each other over a portion of said film path with a finite length while rotating around said axes.

In accordance with the present invention, apparatus for sealing for a form-fill-seal packaging machine, comprises:

a pair of elongated heater assemblies on opposite sides of a film path along which a bag-forming film material is transported; and

rotating means for causing said pair of heater assemblies to rotate in mutually opposite directions and each around one of a pair of mutually parallel horizontal axes while keeping both of said heater assemblies extended parallel to said axes such that said heater assemblies press each other over a portion of said film path with a finite length while rotating around said axes; and is characterised by

axes-moving means for controllably varying the separation between said mutually parallel axes.

The present invention provides an improved sealing means with which the motion of seal jaws can be controlled easily and effectively.

Depending upon the type of the articles to be packaged, it may be desirable to modify the trajectory so as, for example, to be able to give the bag a squeeze in the vertical direction to cause its contents to settle.

The present invention also enables adjustment of the pressure with which the seal jaws are pressed against each other for carrying out the horizontal sealing process. Prior art attempts to make use of a spring for this purpose have not been satisfactory because this tends to increase vibrations especially if the seal jaws are opened and closed at a fast rate. If a motor dedicated to this task is introduced, this affects the overall cost of the system adversely. If use is made of devices including an oil or air pump, on the other hand, there arises the problem of piping and the pressure cannot easily be varied automatically.

The invention provides such means with which the sealing pressure between the seal jaws can be conveniently controlled.

The invention also provides means for allowing the bag being formed to be squeezed before it is horizontally sealed such that the articles being dropped in can settle within the bag,

Brief Description of the Drawings

Fig. 1 is a schematic diagonal view of a part of a form-fill-seal packaging machine incorporating a horizontal sealer embodying the present invention, showing only some of its components relevant to the description of the invention;
Fig. 2 is a schematic diagonal view of a portion of an apparatus according to the present invention for driving a seal jaw of a form-fill-seal packaging machine;
Fig. 3 is a schematic plan view of the apparatus of Fig. 2 when the arm-like frame is in horizontal position;
Fig. 4 is a schematic diagonal view of a portion of another apparatus according to the present invention for driving a pair of seal jaws of a form-fill-seal packaging machine;
Fig. 5 is a horizontal view of the trajectories of the seal jaws operated by the driving apparatus of Fig. 4;
Fig. 6 is a schematic diagonal view of a portion of still another apparatus according to the present invention for controlling the motion of the seal jaws of a form-fill-seal packaging machine;
Fig. 7 is a horizontal view of the trajectories of the seal jaws operated by the driving apparatus of Fig. 6;
Fig. 8 is a schematic of still another apparatus according to the present invention for controlling the motion of the seal jaws of a form-fill-seal packaging machine;
Fig. 9 is a schematic showing the use of an air cylinder to adjust the sealing pressure between the seal jaws according to the invention;
Fig. 10 is a schematic showing the use of a turnbuckle and nuts according to the invention to adjust the sealing pressure between the seal jaws; and
Figs. 11A and 11B are schematic horizontal views of a simple device attached to the side frames of the seal jaws for squeezing the film material.

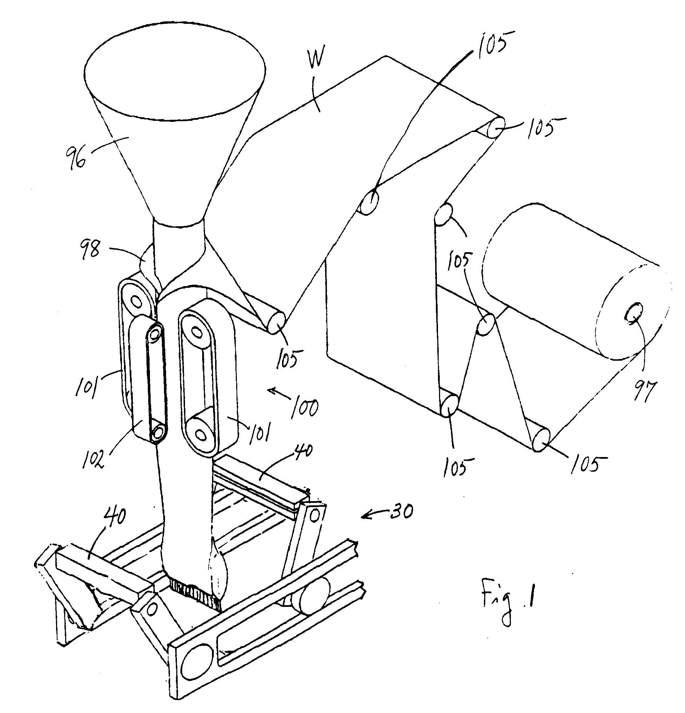

For the purpose of reference, there is schematically shown in Fig. 1 a form-fill-seal packaging machine of the vertical pillow type which may incorporate the present Invention. For convenience, Fig. 1 shows only relevant parts of such a machine related to its forming, filling and sealing operations. In Fig. 1, a web of flexible thermoplastic film material W is shown as unwinding from a film supply roll 97 and being guided by a plurality of guide rolls 105 to be directed to a shoulder-shaped former 98 of a known kind. After the film material W is formed into a tubular shape by the former 98, it is pulled vertically downward by a film-pulling apparatus 100 including a parallel-running pair of pull-down belts 101 and a heater belt 102 which serves to vertically seal the mutually overlapping edge portions of the film material W to thereby effect the vertical sealing process. The film material W, now in the form of a tube, is thereafter horizontally sealed by a horizontal sealer which is disposed below the film-pulling apparatus 100 and includes a pair of seal jaws 40 and a driving mechanism 30 therefor. As the film material W is horizontally sealed into a bag-like form, articles to be packaged are dropped from a hopper 96 above the former 98.

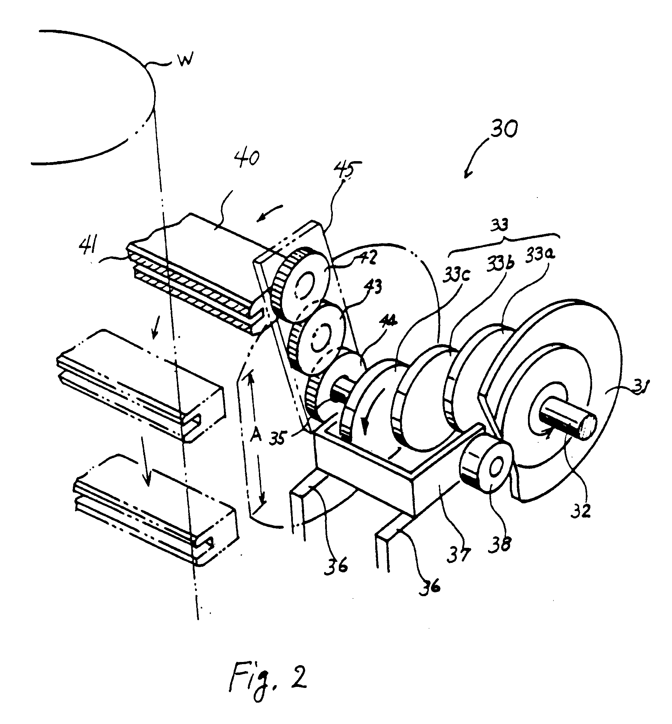

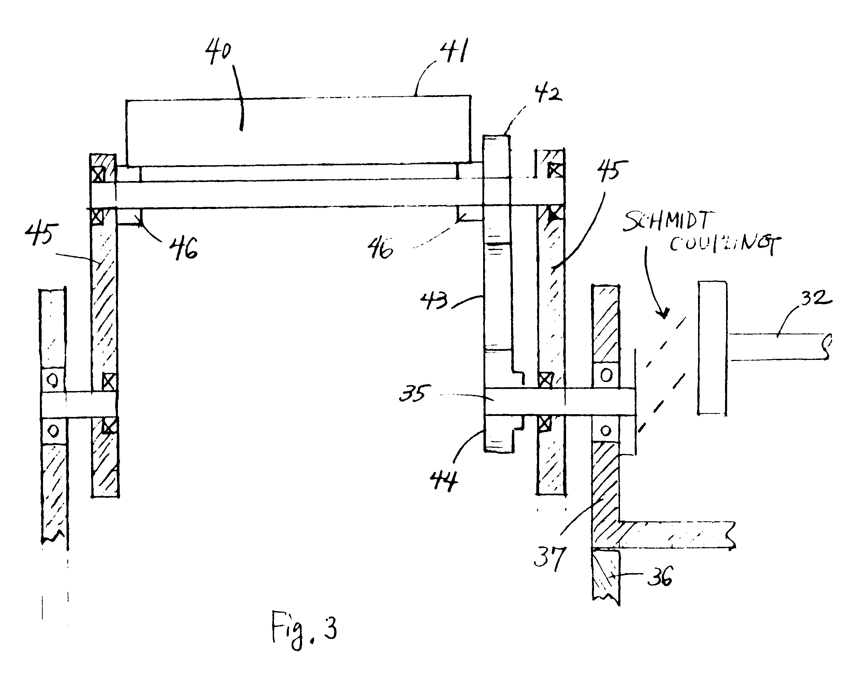

The structure and operations of the seal jaws 40 and their driving mechanism 30 will be described next with reference to Figs. 2 and 3. Since the pair of seal jaws 40 are symmetrically disposed with reference to the tubular film material W to be sealed thereby, Fig. 2 shows only one of the pair.

The driving mechanism 30 includes a cam 31 rigidly mounted to a horizontal drive shaft 32 so as to rotate therearound and therewith. The seal jaw 40 is rotatably supported by an arm-like side frame 45 so as to maintain its horizontal position. The side frame 45 is unistructurally connected to a horizontal seal jaw axis 35 so as to rotate therearound and therewith. The drive shaft 32 and the axis 35 are parallel to each other and in a torque-communicating relationship with each other by means of a Schmidt coupling 33. The Schmidt coupling 33 is a device comprising rotary disks and links therebetween for transmitting torque in a transverse direction. It is described, for example, in Japanese Patent Publication Kokoku 44-19486 published August 23, 1969 (based on U.S. patent application Serial No. 406,696 filed October 27, 1964). It is therefore assumed known and will not be described in any detail herein. In Fig. 2, the Schmidt coupling 33 is schematically drawn as a linked set of three disks 33a, 33b and 33c, the first of these disks (33a) being rigidly mounted to the drive shaft 32 and the third of these disks (33c) being rigidly mounted to the axis 35.

A bracket 37, which is adapted to slide on and along a horizontal guide surface 36, is attached to the seal jaw axis 35 through a bearing. A cam follower 38 which is adapted to remain engaged with the cam 31 is axially supported by this bracket 37 as shown in Fig. 2. The cam 31 is generally D-shaped such that the rotation of the cam 31 with the drive shaft 32 causes a horizontal lateral motion of the bracket 37 and hence of the axis 35, thereby controlling the horizontal separation between the seal jaw 40 and the vertically downward path of the film material W.

As briefly explained above, the seal jaw 40 is supported by the arm-like side frame 45 in such a way that it remains oriented in the same direction, keeping its heating surface (indicated by 41) in vertical orientation, as the frame 45 turns around the axis 35. The mechanism by which the seal jaw 40 is supported in this manner includes a sun gear 44 which is coaxial with the seal jaw axis 35, an idler gear 43 which engages with the sun gear 44, and a planet gear 42 which is of the same diameter as the sun gear 44 and engages with the idler gear 43. The planet gear 42 is axially supported by the side frame 45 and is rigidly affixed to the seal jaw 40 through a supporting member 46.

With the mechanism thus structured, if the cam 31 is rotated by the motion of the drive shaft 32, the cam follower 38, which is adapted to remain in contact with the periphery of the cam 31, causes the bracket 37 and hence the axis 35 to move either towards or away from the vertical path of the film material W. At the same time, the rotary motion of the drive shaft 32 is communicated through the Schmidt coupling 33 to the seal jaw axis 35, thereby causing the side frame 45 to rotate around the axis 35. Since the sun gear 44 and the planet gear 42 are of the same diameter, the planet gear 12, while rotating with the side frame 45 around the axis 35, does not rotate around its own axis. Thus, the heating surface 41 of the seal jaw 40 remains vertical throughout the rotary motion of the seal jaw 40 around the axis 35 as schematically illustrated in Fig. 2. A generally D-shaped trajectory of the seal jaw 40 is illustrated in Fig. 2 by a dotted line. As mentioned above, the seal jaw 40 illustrated in Figs. 2 and 3 is only one of a pair, the other being disposed and operated to move symmetrically.

Thus, as the film material W in tubular form is pulled down at a constant rate, it is horizontally sealed by the pair of seal jaws 40 which are brought together from opposite sides and move downward at the same speed as the film material such that a sufficiently long sealing time can be secured. In Fig. 2, letter A represents the linear part of the generally D-shaped trajectory of the seal jaw 40 wherein the horizontal sealing is to take place.

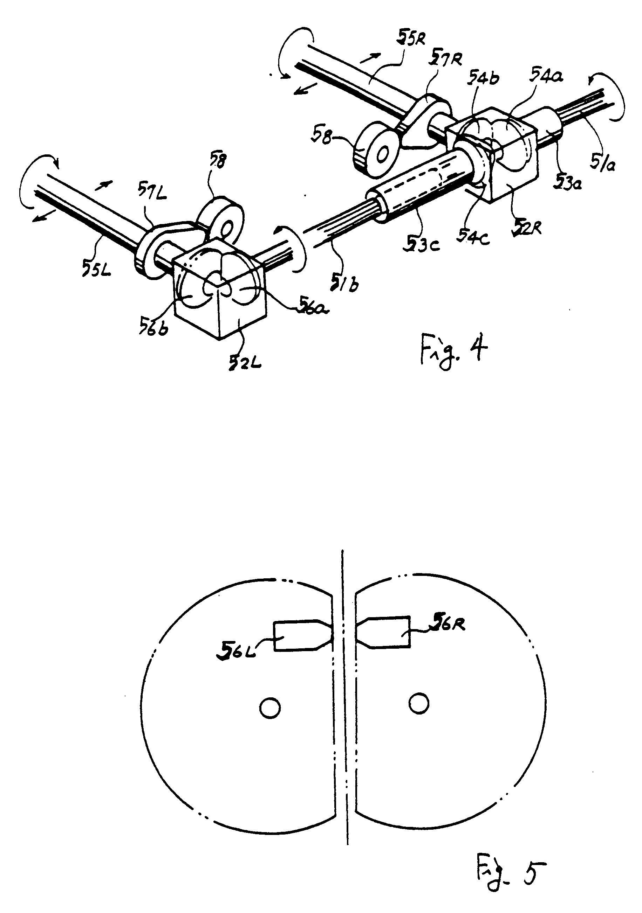

Fig. 4 shows another embodiment of the present invention by means of which a pair of seal jaws (shown schematically at 56R and 56L in Fig. 5) can be caused to move in generally D-shaped trajectories. In Fig. 4, the seal jaw axes corresponding to the pair of seal jaws 56R and 56L in the way described in connection with Figs. 2 and 3 are respectively shown at 55R and 55L. Numeral 51a indicates a (first) spline axis connected to a servo motor (not shown). A (first) gear box 52R contains three (first, second and third) bevel gears (shown respectively at 54a, 54b and 54c) such that the second bevel gear 54b engages with both the first and the third bevel gears 54a and 54c. A (first) sleeve shaft 53a unistructurally formed with the first bevel gear 54a engages with the spline axis 51a so as to be able both to cause the gear box 52R to slide longitudinally therealong and to itself rotate therewith. The second bevel gear 54b is connected to one of the seal jaw axes (55R) and the third bevel gear 54c is unistructurally formed with another (second) sleeve axis 53c which engages another (second) spline axis 51b such that the gear box 52R can slide also longitudinally along the second spline axis 51c and the rotation of the third bevel gear 54c can be communicated thereto. The other end of the second spline axis 51b distal from the first gear box 52R is connected to a first bevel gear 56a in another (second) gear box 52L which also contains a second bevel gear 56b which is unistructurally formed with the second seal jaw axis 55L and engages with the first bevel gear 56a.

Cams 57R and 57L are mounted respectively to the first and second seal jaw axes 55R and 55L and in contact respectively to two cam followers which are affixed to a frame. These cams 57R and 57L are so shaped that the seal jaw axes 55R and 55L, as they are rotated, move towards or away from each other such that the seal jaws 56R and 56L are moved in generally D-shaped trajectories as shown in Fig. 5 in the same manner as described above in connection with Figs. 2 and 3.

It should now be noted in this connection that the seal jaws 56R and 56L can be made to follow modified trajectories simply by replacing the cams 57R and 57L by others with a different shape. When the bags are being filled with articles with a low volume density such as potato chips, for example, it is preferable to "squeeze" the film material W prior to the horizontal sealing process so that the articles being loaded will not be present where the sealing takes place. This can be accomplished by exchanging the set of cams (31 of Fig. 2 and 57 of Fig. 4) by another with an appropriate shape.

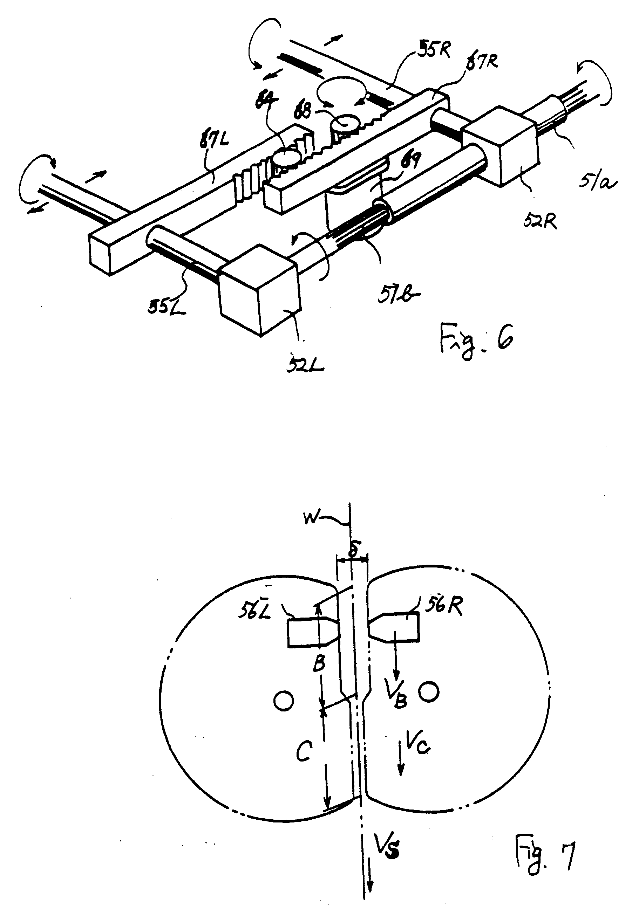

Fig. 6 shows still another embodiment of the present invention for simultaneously carrying out both the horizontal sealing and the "squeezing" of the kind mentioned above. In Fig. 6, the components which are substantially the same as those already shown in Fig. 4 and explained above are denoted by the same numerals and will not be explained again. The embodiment shown in Fig. 6 is characterized as having a pinion 64 and two rack gears 67R and 67L which both engage with the pinion 64 and through which the two seal jaw axes 55R and 55L are mutually connected. Moreover, one of the rack gears (67R in Fig. 6) engages with another pinion 68 connected with an axes-moving servo motor 69 such that the seal jaw axes 55R and 55L can be moved toward or away from each other according to the operation of this servo motor 69 provided independently of the jaw-rotating servo motor (not shown) connected to the first spline axis 51a.

According to one embodiment of the invention, the axes-moving servo motor 69 is programmed to rotate in positive and negative directions in synchronism with the jaw-rotating servo motor such that the trajectories of the seal jaws 56R and 56L will look as shown in Fig. 7, having on the upstream side of the linear trajectory part A a "squeezing region" B wherein the seal jaws 56R and 56B are separated by a predetermined small distance $\delta$ and on the downstream side of the linear trajectory part A a horizontal sealing region C wherein the two seal jaws 56R and 56L are brought mutually closer together.

According to a more preferred embodiment, the rotational speed of the jaw-rotating servo motor is controlled such that the linear speed $V_B$ of the seal jaws 56R and 56B in the "squeezing region" B will be greater than the downward transfer speed $V_S$ of the film material W and that the linear speed $V_C$ of the seal jaws 56R and 56L in the horizontal sealing region C will be equal to $V_S$.

Fig. 8, using the same numerals again to indicate the comparable components described above and shown in Fig. 4 and/or Fig. 6, shows still another embodiment of the invention different from the one shown above in Fig. 6 in that Schmidt couplings 73R and 74L are used to transmit torque from the gear boxes 52R and 52L to the seal jaw axes 55R and 55L. An axes-moving servo motor 79 is connected to a pair of arms 77R and 77L, instead of the pinions 64 and 68 and the rack gears 67R and 67L shown in Fig. 6, such that the separation between the two arms 77R and 77L can be controllably increased or decreased and this change in the separation between the arms 77R and 77L is directly communicated through mutually coaxial rods 78R and 78L to the seal jaw axes 55R and 55L. In this example, too, the seal jaws can be caused to travel on generally D-shaped trajectories with a squeezing region and a horizontal sealing region by operating the axes-moving servo motor 79 and a jaw-rotatilng servo motor (not shown in Fig. 8 but connected to the spline axis 51a) in an appropriately coordinated manner.

In summary, the apparatus for driving the seal jaws according to the present invention are characterized as having a pair of seal jaw axes which rotate in mutually opposite directions and a mechanism for controllably increasing and decreasing the distance between these axes. The apparatus shown in Fig. 2 is characteristic in that a single motor means serves both to rotate the seal jaw axis and to shift the position of the seal jaw axis laterally. The apparatus shown in Figs. 6 and 8 are characteristic in that two independent motor means are used for these two kinds of motion such that more complicated trajectories and squeezing are possible.

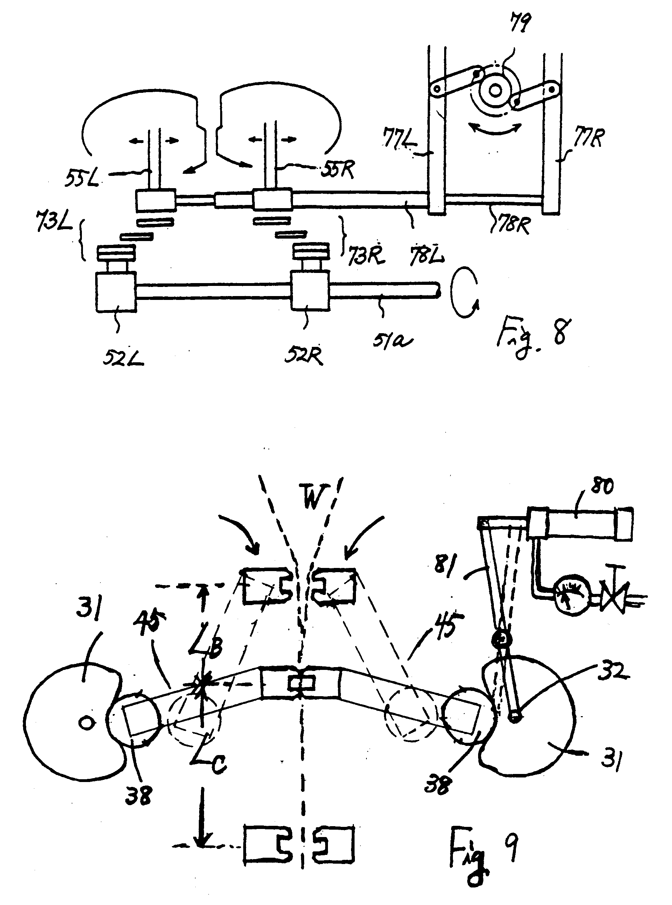

The examples described above are intended to be merely illustrative of the invention and not to place any limitations on its scope. Many variations and modifications are possible on the examples illustrated above within the scope of the invention. For example, a device for controlling the sealing pressure (that is, the pressure with which the pair of mutually opposite seal jaws 40 presses the film material from both sides to make the horizontal seal) may be incorporated. One method of accomplishing this purpose would be to attach one end of a rotatably supported lever 81 as shown schematically in Fig. 9, to the drive shaft 32 of the cam 31 in the apparatus described above with reference to Fig. 2. The other end of the lever 81 is connected to an air cylinder 80 such that the drive shaft 32 of the cam 31 can be moved horizontally towards the other cam of the pair on the opposite side of the film material W.

A general mechanism has already been described above for causing the seal jaws 40 to execute D-shaped trajectories as shown in Fig. 7 with a "squeezing region" (of linear distance $L_B$ and a horizontal sealing region (of linear distance $L_C$) has been explained already. When the seal jaws 40 are moving within the squeezing region (at speed $V_B$ greater than the film speed $V_S$ as explained above), the air cylinder 80 is not actuated yet and a small distance is maintained between the seal jaws 40 for the squeezing action to cause the articles inside the bag to settle. At the end of the squeezing region, the downward speed of the seal jaws 40 is reduced to $V_C$ equal to $V_S$ and the air cylinder 80 is actuated so as to shift the position of the drive shaft 32 of the cam 31 and to thereby cause the seal jaws 40 to compress each other. The compressive force between the seal jaws can be adjusted by controlling the air pressure. The time for squeezing $t_B$, the squeezed distance L on the film material and the time for sealing $t_C$ can be controlled according to the following formulas:

$$t_B = L_B/V_B;$$
$$L = L_B\{1 - V_S/V_B\};$$

and

$$t_C = L_C/V_S.$$

In cases where an axes-moving servo motor or the like is used for adjusting the distance separating the two seal jaw axes as shown, for example, in Fig. 6, the sealing pressure can be controlled by adjusting the torque of the motor.

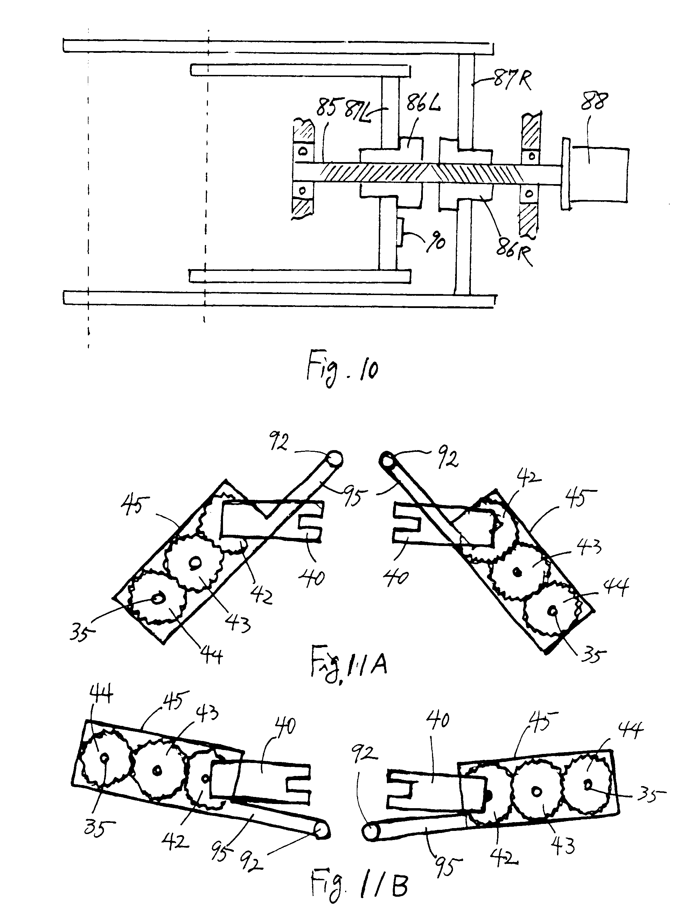

Another method of controlling the sealing pressure between seal jaws in a horizontal sealing process is illustrated in Fig. 10 where a turnbuckle 85 with right-handed and left-handed screw sections provided thereon serves the purpose of the rack gears 67R and 67L of Fig. 6. Nuts 86R and 86L engage respectively with these right-handed and left-handed screw sections of the turnbuckle 85 such that the separation therebetween tends to increase or decrease, depending on the direction In which the turnbuckle 85 is rotated by means of a motor 88. In Fig. 10, numerals 87R and 87L respectively indicate a cross frame (not shown in Fig. 3) connecting the side frames 45 on both sides of the seal jaw and the two parallel dotted lines indicate the positions of the seal jaw axes.

As the jaw-rotating motor (not shown) is rotated and the seal jaws are on the circular parts of their generally D-shaped trajectories, the motor 88 serves mainly as an axes-moving motor. When the seal jaws are on the linear parts of their trajectories, the operation of this axes-moving motor 88 is controlled by its torque. On the top halves of the linear parts of the generally D-shaped trajectories, the motor 88 rotates so as to push the nuts 86R and 86L to move away from each other. Since the motor 88 is now being operated in a torque-controlling mode, however, it has a braking effect on the nuts 86R and 86L, thereby generating a compressive force between the seal jaws. When the seal jaws are on the bottom halves of the linear parts of the trajectories, the direction of rotation of the motor 88 is reversed. As a result, the nuts 86R and 86L tend to move towards each other, thereby generating a compressive force between the seal jaws. In summary, the sealing pressure can be adjusted to any level without any additional equipment. The right-hand and left-hand screw parts of the turnbuckle 85 are preferably so designed that the cross frames 87R and 87L can be manually pushed apart easily when it is desired, for example, to adjust the position of the film material while the motor 88 is not running.

A load cell 90 may be attached to one of the cross frames (87L in Fig. 10). The sealing pressure developed between the seal jaws 56R and 56L is transmitted through the side frames 45 to the cross frame 87L, tending to bend it. The strain thus generated is detectable by this load cell 90 and the sealing pressure at this moment can be calculated from this detected magnitude of the strain.

A much simpler device with which the squeezing operation can be effected is described next with reference to Figs. 11A and 11B where the components which are comparable to those already explained above are again indicated by the same numerals. This device is characterized as having elongated squeezing bars 92 (shown only sectionally in Figs. 11A and 11B) each supported by members 95 protruding from one of the side frames 45 radially away from the seal jaw axis 35. When the seal jaws 40 are about to start on the linear part of their generally D-shaped trajectories, the distal ends of these projecting members 95 away from the side frames 45 and hence the squeezing bard 92 are above the seal jaws 40 as shown in Fig. 11A because, as explained above, the seal jaws 40 are adapted to always keep their horizontal positions (say, by means of the sun gears 44, the idlers 43 and the planet gears 42 as explained above with reference to Fig. 2). When the seal jaws are at about the same height as the seal jaw axes 35, however, these projecting members 95 as well as the squeezing bars 92 are below the seal jaws 40 as shown in Fig. 11B because they are affixed to the respective seal jaws. It can be understood by a comparison between Figs. 11A and 11B that these squeezing bars 92 travel a longer vertical distance than the seal jaws 40 between these two points in time. In other words, if the seal jaws 40 are caused to move at the same speed as the film material W, the squeezing bard 92 move faster than the film material and this has the desired squeezing effect on the film material.

## Claims

1. An apparatus for sealing for a form-fill-seal packaging machine, comprising:
   a pair of elongated heater assemblies (40) on opposite sides of a film path along which a bag-forming film material is transported; and
   rotating means (30) for causing said pair of heater assemblies to rotate in mutually opposite directions and each around one of a pair of mutually parallel axes while keeping bath of said heater assemblies extended parallel to said axes and such that said heater assemblies press each other over a portion (A) of said film path with a finite length while rotating around said axes; characterised by

axes-moving means for controllably varying the separation between said mutually parallel axes.

2. The apparatus of claim 1, wherein said heater assemblies (40) each have a heating surface (41) and said rotating means include heater supporting means for rotatably supporting said heater assemblies respectively around said axes, said supporting means including an orienting mechanism which serves to cause said heating surface to remain oriented in a same direction as said heater assemblies are rotated around said axes.

3. The apparatus of claim 2 wherein said orienting mechanism includes sun gears (44) each affixed to one of said axes (35) so as to rotate therewith, idler gears (43) each engaging with one of said sun gears, and planet gears (42) each engaging with one of said idlers, said planet gears (42) having the same diameter as said sun gears, and said heater assemblies (40) being each affixed to one of said planet gears.

4. The apparatus of any of claims 1 to 3 wherein said rotating means and said axes-moving means are in motion communicating relationship.

5. The apparatus of claim 4 wherein said rotating means include a cam and said axes-moving means include a cam follower which remains in contact with said cam.

6. The apparatus of any of claims 1 to 3 wherein said rotating means and said axes-moving means are independently controllable.

7. Apparatus according to any one of the preceding claims, wherein said rotating means and said axes-moving means are so controllable as to cause said heater assemblies to have a squeezing effect on a tubularly formed bag-forming material on said film path before effecting a sealing thereon.

8. The apparatus of claim 6 wherein said axes-moving means include a pinion (64) and a pair of rack gears (67R,67L) engaging said pinion and each connected to one of said axes.

9. The apparatus of claim 6 wherein said axes-moving means include a turnbuckle and frames each supporting one of said axes, said frames being in engaged relationship with said turnbuckle such that the separation between said frames varies as said turnbuckle is rotated.

10. The apparatus of claim 9 wherein said turnbuckle has right-hand and left-hand screw parts where said frames engage said turnbuckle, said screw parts being so designed that said frames can be manually moved away from each other while remaining engaged with said turnbuckle.

11. The apparatus of claim 1 further comprising a pressure control means for controlling the pressure with which said pair of heater assemblies are pressed against each other while traveling on said portion of said film path.

12. The apparatus of claim 11 wherein said pressure control means include a turnbuckle and frames each supporting one of said axes, said frames being in engaged relationship with said turnbuckle such that the separation between said frames varies as said turnbuckle is rotated.

13. The apparatus of claim 12 wherein said turnbuckle has right-hand and left-hand screw parts where said frames engage said turnbuckle, said screw parts being so designed that said frames can be manually moved away from each other while remaining engaged with said turnbuckle.

14. The apparatus of claim 11 further comprising a pressure sensor on said heater supporting means for measuring said pressure between said heater assemblies.

15. The apparatus of claim 2 further comprising a pair of elongated film-squeezing members which are affixed to said supporting means and parallel to said axes such that said film-squeezing members can approach each other so as to squeeze a tubularly formed film material on said path as said heater assemblies are rotated by said rotating means.

**Patentansprüche**

1. Vorrichtung zum Versiegeln für eine Maschine zum Formen, Füllen und Schließen von Pak-

kungen, mit:
zwei langgestreckten Heizanordnungen (40), die sich auf gegenüberliegenden Seiten eines Folienweges befinden, entlang dem ein beutelbildendes Folienmaterial gefördert wird; und einer Dreheinrichtung (30) zum Drehen der zwei Heizanordnungen in zueinander entgegengesetzten Richtungen, wobei sich jede um eine von zwei zueinander parallelen Achsen dreht, während beide Heizanordnungen parallel gerichtet zu den Achsen gehalten werden, und zwar so, daß sich die Heizanordnungen über einen Folienwegabschnitt (A) endlicher Länge aneinanderdrücken, während sie um die Achsen rotieren; gekennzeichnet durch eine Achsverstelleinrichtung zum Steuern des Abstandes zwischen den zueinander parallelen Achsen.

2. Vorrichtung nach Anspruch 1, wobei jede der Heizanordnungen (40) eine Heizfläche (41) und die besagte Dreheinrichtung eine Heizungslagereinrichtung zum drehbaren Lagern der Heizanordnungen jeweils um die besagten Achsen einschließt, wobei die Lagereinrichtung einen Ausrichtmechanismus einschließt, der bewirkt, daß die Heizungsfläche beim Drehen der Heizanordnungen um die Achsen in einer gleichen Richtung ausgerichtet verbleibt.

3. Vorrichtung nach Anspruch 2, wobei der Ausrichtmechanismus Sonnenzahnräder (44), von denen jedes an einer der Achsen (35) festgehalten ist, so daß es mit dieser dreht, Zwischenzahnräder (43), von denen jedes in eines der Sonnenzahnräder eingreift, und Planetenzahnräder (42) einschließt, von denen jedes in eines der Zwischenzahnräder eingreift und denselben Durchmesser wie die besagten Sonnenzahnräder hat, wobei jede der Heizanordnungen (40) mit einem der Planetenzahnräder fest verbunden ist.

4. Vorrichtung nach einem beliebigen der Ansprüche 1 bis 3, wobei die Dreheinrichtung und die Achsverstelleinrichtung in Bewegungsübertragungsverbindung stehen.

5. Vorrichtung nach Anspruch 4, wobei die Dreheinrichtung einen Nocken und die Achsverstelleinrichtung eine Nockenfolgeeinrichtung hat, die mit dem Nocken in Berührung bleibt.

6. Vorrichtung nach einem beliebigen der Ansprüche 1 bis 3, wobei die Dreheinrichtung und die Achsverstelleinrichtung unabhängig voneinander steuerbar sind.

7. Vorrichtung nach einem beliebigen der vorstehenden Ansprüche, wobei die Dreheinrichtung und die Achsverstelleinrichtung so steuerbar sind, daß die Heizanordnungen eine Quetschwirkung auf ein, auf dem Folienweg befindliches, rohrförmiges, beutelbildendes Material haben, bevor es versiegelt wird.

8. Vorrichtung nach Anspruch 6, wobei die Achsverstelleinrichtung ein Ritzel (64) und zwei Zahnstangen (67R, 67L) hat, in die das Ritzel eingreift, wobei jede der Zahnstangen mit einer der Achsen verbunden ist.

9. Vorrichtung nach Anspruch 6, wobei die Achsverstelleinrichtung eine Spannvorrichtung und Rahmen einschließt, wobei jeder Rahmen eine der besagten Achsen trägt und die Rahmen mit der Spannvorrichtung derart in Arbeitsberührung sind, daß sich beim Drehen der Spannvorrichtung der Abstand zwischen den besagten Rahmen ändert.

10. Vorrichtung nach Anspruch 9, wobei die Spannvorrichtung rechtsgängige und linksgängige Spindelteile hat, an denen die Rahmen mit der Spannvorrichtung in Eingriff stehen, wobei die Spindelteile so gestaltet sind, daß die Rahmen manuell voneinander wegbewegt werden können, während sie mit der Spannvorrichtung in Eingriff verbleiben.

11. Vorrichtung nach Anspruch 1, mit einer Drucksteuereinrichtung zum Steuern des Druckes, mit dem die beiden Heizanordnungen gegeneinander gedrückt werden, während diese auf dem Folienwegabschnitt wandern.

12. Vorrichtung nach Anspruch 11, wobei die Drucksteuereinrichtung eine Spannvorrichtung und Rahmen aufweist, wobei jeder der Rahmen eine der Achsen trägt und die Rahmen mit der Spannvorrichtung derart in Arbeitsberührung sind, daß sich beim Drehen der Spannvorrichtung der Abstand zwischen den Rahmen ändert.

13. Vorrichtung nach Anspruch 12, wobei die Spannvorrichtung rechtsgängige und linksgängige Spindelteile hat, an denen die Rahmen mit der Spannvorrichtung in Eingriff sind, wobei die Spindelteile so gestaltet sind, daß die Rahmen manuell voneinander wegbewegt werden können, während sie mit der Spannvorrichtung in Eingriff verbleiben.

14. Vorrichtung nach Anspruch 11, ferner mit einem auf der Heizungslagereinrichtung befindlichen Drucksensor zum Messen des zwischen den Heizanordnungen ausgeübten Druckes.

**15.** Vorrichtung nach Anspruch 2, ferner mit zwei länggestreckten Folienquetschgliedern, die derart an der Lagereinrichtung festgehalten werden und sich parallel zu den Achsen befinden, daß sich die Folienquetschglieder einander annähern können, um ein auf dem besagten Weg befindliches rohrförmiges Folienmaterial zu quetschen, während die Heizanordnungen durch die Dreheinrichtung gedreht werden.

**Revendications**

**1.** Appareil à souder destiné à une machine de fabrication, remplissage et scellage d'emballages, qui comprend:
- une paire d'ensembles chauffants (40) allongés, placés sur les côtés opposés du trajet de film le long duquel un matériau en film de formation de sac est acheminé, et
- des moyens de rotation (30) destinés à faire tourner ladite paire d'ensembles chauffants dans des sens opposés l'un de l'autre et chacun autour d'un axe d'une paire d'axes mutuellement parallèles, tout en maintenant les deux ensembles chauffants parallèles auxdits axes et de telle manière que lesdits ensembles chauffants appuient l'un contre l'autre sur une partie (4) dudit trajet de film de longueur finie tandis qu'ils tournent autour desdits axes,

caractérisé par des moyens de déplacement des axes destinés à faire varier de manière commandée la distance de séparation entre lesdits axes mutuellement parallèles.

**2.** Appareil selon la revendication 1, dans lequel lesdits ensembles chauffants (40) ont chacun une surface de chauffage (41) et lesdits moyens de rotation comprennent un moyen de support d'ensemble chauffant pour supporter en rotation lesdits ensembles chauffants autour de leurs axes respectifs, ledit moyen de support comprenant un mécanisme d'orientation qui sert à amener ladite surface de chauffage à rester orientée dans la même direction lorsque lesdits ensembles chauffants tournent autour desdits axes.

**3.** Appareil selon la revendication 2, dans lequel ledit mécanisme d'orientation comprend des pignons planétaires (44) fixés chacun à l'un desdits axes (35) de façon à tourner avec lui, des pignons fous (43) qui engrènent chacun avec l'un desdits pignons planétaires et des pignons satellites (42) qui engrènent chacun avec l'un desdits pignons fous, lesdits pignons satellites (42) ayant le même diamètre que lesdits pignons planétaires et lesdits ensembles chauffants (40) étant chacun fixés à l'un desdits pignons satellites.

**4.** Appareil selon l'une quelconque des revendications 1 à 3, dans lequel lesdits moyens de rotation et lesdits moyens de déplacement d'axes sont reliés en vue d'une communication de mouvement.

**5.** Appareil selon la revendication 4, dans lequel lesdits moyens de rotation contiennent une came et lesdits moyens de déplacement d'axes contiennent un suiveur de carne qui reste en contact avec ladite came.

**6.** Appareil selon l'une quelconque des revendications 1 à 3, dans lequel lesdits moyens de rotation et lesdits moyens de déplacement d'axes peuvent être commandés de manière indépendante.

**7.** Appareil selon l'une quelconque des précédentes revendications, dans lequel lesdits moyens de rotation et lesdits moyens de déplacement d'axes peuvent être commandés de manière à faire que lesdits ensembles chauffants aient un effet de compression sur un matériau de formation de sac ayant reçu une forme tubulaire et se trouvant sur ledit trajet de film avant d'y effectuer une soudure.

**8.** Appareil selon la revendication 6, dans lequel lesdits moyens de déplacement d'axes comprennent un pignon (64) et une paire de crémaillères (67R, 67L) qui engrènent avec ledit pignon et sont chacune couplées à l'un desdits axes.

**9.** Appareil selon la revendication 6, dans lequel lesdits moyens de déplacement d'axes comprennent un tendeur et des cadres dont chacun soutient l'un desdits axes, lesdits cadres étant en prise avec ledit tendeur de telle sorte que l'écart de séparation entre lesdits cadres varie lorsqu'on fait tourner ledit tendeur.

**10.** Appareil selon la revendication 9, dans lequel ledit tendeur comprend des pièces filetées avec pas à droite et pas à gauche au niveau desquelles lesdits cadres se mettent en prise avec ledit tendeur, lesdites pièces filetées étant conçues pour que lesdits cadres puissent être écartés manuellement l'un de l'autre tout en restant en prise avec ledit tendeur.

11. Appareil selon la revendication 1, qui comprend en outre des moyens de commande de la pression destinés à commander la pression avec laquelle les ensembles chauffants de ladite paire sont appuyés l'un contre l'autre pendant qu'ils se déplacent sur ladite partie dudit trajet du film.

12. Appareil selon la revendication 11, dans lequel lesdits moyens de commande de la pression comprennent un tendeur et des cadres dont chacun soutient l'un desdits axes, lesdits cadres étant en prise avec ledit tendeur de telle sorte que l'écart de séparation entre lesdits cadres varie lorsqu'on fait tourner ledit tendeur.

13. Appareil selon la revendication 12, dans lequel ledit tendeur comprend des pièces filetées avec pas à droite et pas à gauche au niveau desquelles lesdits cadres se mettent en prise avec ledit tendeur, lesdites pièces filetées étant conçues pour que lesdits cadres puissent être écartés manuellement l'un de l'autre tout en restant en prise avec ledit tendeur.

14. Appareil selon la revendication 11, qui comprend en outre un capteur de pression, sur ledit moyen de support d'ensembles chauffants, destiné à mesurer ladite pression entre lesdits ensembles chauffants.

15. Appareil selon la revendication 2, qui comprend en outre une paire d'éléments allongés d'écrasement de film qui sont fixés audit moyen de support et parallèles auxdits axes, de telle sorte que lesdits éléments d'écrasement de film peuvent s'approcher l'un de l'autre pour écraser un matériau en film ayant reçu une forme tubulaire et se trouvant sur ledit trajet lorsque lesdits ensembles chauffants sont mis en rotation par lesdits moyens de rotation.

Fig. 1

Fig. 2

Fig. 3

Fig. 4

Fig. 5

Fig. 6

Fig. 7

Fig. 8

Fig. 9

16

Fig . 10

Fig. 11A

Fig. 11B